# EUROPEAN PATENT SPECIFICATION

(11) **EP 4 048 641 B1**
(45) Date of publication and mention of the grant of the patent: **26.02.2025**
(21) Application number: 20796523.7
(22) Date of filing: 19.10.2020
(51) Int. Cl.: C02F 1/44, B01D 61/02, B01D 61/12

(54) **A WATER PURIFICATION APPARATUS, AND A METHOD FOR COOLING A RO-MEMBRANE IN A WATER PURIFICATION APPARATUS**
WASSERREINIGUNGSVORRICHTUNG UND VERFAHREN ZUM KÜHLEN EINER RO-MEMBRAN IN EINER WASSERREINIGUNGSVORRICHTUNG
APPAREIL DE PURIFICATION D'EAU, ET PROCÉDÉ DE REFROIDISSEMENT D'UNE MEMBRANE D'OI DANS UN APPAREIL DE PURIFICATION D'EAU

(30) Priority: 24.10.2019 SE 1951217
(43) Date of publication of application: 31.08.2022
(73) Proprietor: BAXTER HEALTHCARE SA, 8152 Glattpark (Opfikon) (CH); Baxter International Inc., Deerfield, Illinois 60015-4633 (US)
(72) Inventor: EKDAHL, Olof, 264 53 Ljungbyhed (SE); HALLSTRÖM, Robert, 226 55 Lund (SE); SENDELIUS, Peter, 245 33 Staffanstorp (SE); DALENIUS, Dennis, 224 64 Lund (SE)
(74) Representative: Sweden SHS IP Office
(86) International application number: PCT/EP2020/079354
(87) International publication number: WO 2021/078681

(56) References cited:
- JP-A- S60 102 905
- US-A1- 2004 168 978
- A. F. FOUREAUX ET AL: "Rejection of pharmaceutical compounds from surface water by nanofiltration and reverse osmosis", SEPARATION AND PURIFICATION TECHNOLOGY, vol. 212, 7 November 2018 (2018-11-07), pages 171 - 179, XP055764135

## Description

### Technical field

The present disclosure relates to the field of water purification, and especially to water purification by means of reverse osmosis.

### Background

Reverse osmosis (RO) is a technique for water purification that may be used in the process for producing purified water suitable for dialysis.

In a system using RO, the feed water is typically pressurized by a pump and forced through a RO-membrane to overcome the osmotic pressure. The RO-membrane is a semipermeable membrane where water passing through the membrane creates a purified permeate stream. The permeate water is for example used by a medical device as an ingredient in a dialysis solution prepared at the point of care.

The possibility to produce dialysis solution at the point of care may relief users from the heavy work of handling pre-mixed bags with dialysis solution, and also reduce costs for logistics. However, the production is then performed at different places where the quality of the water may vary. It is desired to be able to create purified water with a required quality irrespective of the location of the production. The RO-membrane is also affected by temperature, and an increased temperature of the RO-membrane may cause wear to the RO-membrane, and increase the permeability of the RO-membrane, see for example the published document WO20172170081A1. Further publications in the area are A.F. FOUREAUX et al: "Rejection of pharmaceutical compounds from surface water by nanofiltration and reverse osmosis", Separation and purification technology, vol. 212, 7 November 2018, pages 171-179, XP055764135, investigating the performance of nanofiltration and reverse osmosis. JPS60102905A discloses methods for treating waste fluid, and US2004168978 discloses a method for recirculating tangential separation system.

In order to mitigate microbiological growth, the fluid path of the water purification apparatus may be heat disinfected. The heat disinfection is typically regularly performed, with the consequence that the RO-membrane is regularly heated to a high temperature. This heat disinfection is effective in mitigating microbiological growth but may also cause wear to the RO-membrane. In order to increase the life-time of the RO-membrane, heating as well as cool down of the RO-membrane at disinfection should be performed with a limited temperature gradient.

### Summary

It is desired to improve the life-time of the RO-membrane and to be able to deliver a required quality of the purified water irrespective of the location of the water purification apparatus.

Thus, it is an objective of the disclosure to alleviate at least some of the drawbacks with the prior art. It is a further objective to provide a water purification apparatus that can increase the life-time of the RO-membrane. It is a still further objective to provide a water purification apparatus that is capable of efficiently providing a consistent quality of the permeate water.

These objectives and others are at least partly achieved by the apparatus and method according to the independent claims, and by the embodiments according to the dependent claims. According to one aspect, the disclosure relates to a water purification apparatus comprising a RO-device comprising a RO-membrane. The RO-device is configured to receive inlet water to be purified from an inlet path and produce permeate water into a permeate path and reject water into a reject path. The apparatus further comprises a recirculation path arranged to recirculate reject water from the reject path to the inlet water, a waste path arranged to pass reject water from the reject path to a drain, and a cooling arrangement comprising a cooling device. The cooling arrangement is configured to cool the recirculating reject water in the recirculation path with the cooling device. The apparatus further comprises a feed pump arranged to receive the inlet water via the inlet path and to pump feed water via a feed path to an inlet of the RO-device, a permeate recirculation path fluidly connecting the permeate path at a recirculation point, and the inlet path, and a control device arranged to the permeate recirculation path to control the flow in the permeate recirculation path. The apparatus further comprises a heater arranged to heat permeate water in the permeate path upstream the recirculation point, and a permeate valve arranged to the permeate path and arranged to control the flow in the permeate path between an open state and a closed state, wherein the recirculation point is located upstream the permeate valve. The apparatus further comprises an inlet valve arranged to the inlet path and arranged to control the flow in the inlet path between an open state and a closed state, a drain valve arranged to the waste path, and a sensor configured to measure a property indicative of a temperature of the RO-membrane. The apparatus also comprises a control arrangement configured to control the apparatus to perform heat disinfection of the RO-membrane by means of permeate water heated by the heater, wherein the heat disinfection includes passing the heated permeate water via the permeate recirculation path through the RO-membrane, and to control the cooling arrangement to cool the recirculating reject water in the recirculation path in order to cool the RO-membrane to achieve a desired temperature of the RO-membrane based on the measured property indicative of a temperature of the RO-membrane after the heat disinfection of the RO-membrane is completed. The control arrangement is further configured to prevent fresh inlet water to reach the RO-device, using the inlet valve; prevent permeate water from being passed from the apparatus, using the permeate valve, and to prevent reject water from being passed to drain, using the drain valve, during the heat disinfection and cooling of the RO-membrane (2a). Hence, the apparatus provides controlled cooling of the RO-membrane. The time the RO-membrane is exposed to high temperatures may then be reduced.

Thereby the life-time of the RO-membrane may be prolonged, and the down-time for the apparatus may be reduced.

In some embodiments, the control arrangement is configured to control the cooling arrangement to reduce the temperature of the RO-membrane with a certain temperature rate, based on the measured property. Thus, a cooling that increases the life-time of the RO-membrane is accomplished.

In some embodiments, the cooling arrangement comprises a cooling path configured to direct water to the cooling device to be used as a cooling liquid by the cooling device. Thus, the cooling device may use heat transfer from a first fluid to a second fluid.

In some embodiments, the cooling path is configured to direct inlet water from the inlet path to the cooling device to be used as a cooling liquid by the cooling device, wherein the cooling path further is configured to direct the inlet water used as the cooling liquid by the cooling device and outputted from the cooling device, to drain. Thus, fresh inlet water may be used as cooling liquid, and there is no need to introduce fresh water into the RO-device in order to cool down the RO-membrane.

In some embodiments, the cooling path comprises a bypass path configured to bypass the cooling device and direct inlet water into the waste path or cooling path downstream the cooling device in order to cool the reject water being passed to drain. Thus, the heated inlet water can be cooled with fresh inlet water that has not gone through the cooling device. Thereby the risk that a user becomes burnt from the heated water is reduced.

In some embodiments, the cooling device comprising a heat exchanger. Thus, a standard product may be used for the cooling.

In some embodiments, the cooling device comprises a thermoelectric cooler. The thermoelectric cooler is configured to transfer heat from the recirculating reject water in the recirculation path to another fluid flow in the apparatus. Thus, a thermoelectric cooler may be used to cool the recirculating reject water.

In some embodiments, the thermoelectric cooler is configured to transfer heat from the recirculating reject water in the recirculation path to permeate water in the permeate path. Thus, the permeate water may be heated at the same time as the RO-membrane is cooled, whereby an efficient use of the excess heat is achieved.

In some embodiments, the apparatus is configured to measure a property indicative of a temperature of the permeate water downstream a point of heat transfer to the permeate water. The control arrangement is configured to control the cooling arrangement based on the measured property, in order to achieve a predetermined temperature of the permeate water. Thus, a certain predetermined temperature of the permeate water may be achieved. The predetermined temperature is for example set by the operator.

In some embodiments, the thermoelectric cooler is configured to transfer heat from the recirculating reject water in the recirculation path to reject water being passed to drain. Thereby the RO-membrane can be cooled in a controlled manner during water production or after heat-disinfection.

In some embodiments, the apparatus comprises a concentration sensor configured to measure the concentration of the permeate water, and a temperature sensor configured to measure a property indicative of the temperature of the reject water being passed to drain downstream the thermoelectric cooler. The control arrangement is configured to control cooling of the recirculating reject water in the recirculation path based on the concentration of the permeate water and the property of the reject water being passed to drain. Thus, the cooling can be used to control the concentration of the permeate water.

According to a second aspect, the disclosure relates to a method for cooling a RO-membrane in a water purification apparatus comprising a RO-device comprising the RO-membrane according to the first aspect. The method comprises receiving inlet water to be purified to the RO-device from an inlet path, producing permeate water into a permeate path and reject water into a reject path. The method further comprises recirculating reject water from the reject path to the inlet water via a recirculation path and performing heat disinfection of the RO-membrane by means of water heated by a heater, wherein the heat disinfection includes passing the heated water via a permeate recirculation path through the RO-membrane. The method further comprises controlling a cooling arrangement comprising a cooling device to cool the recirculating reject water in the recirculation path, in order to cool the RO-membrane after the heat disinfection of the RO-membrane is completed, wherein the performing heat disinfection and controlling comprises, during the heat disinfection and cooling of the RO-membrane: preventing fresh inlet water to reach the RO-device, using an inlet valve, preventing permeate water from being passed from the apparatus, using a permeate valve; and preventing reject water from being passed to drain, using a drain valve.

According to a third aspect, the disclosure relates to a computer program product comprising instructions to cause the apparatus according to the first aspect to perform the method according to the second aspect.

According to a fourth aspect, the disclosure relates to a computer-readable medium having stored thereon the computer program of the third aspect.

### Brief description of the drawings

Fig. 1 illustrates a conceptual water purification system according to some embodiments.
Fig. 2 illustrates a water purification apparatus according to a first embodiment.
Fig. 3 illustrates a water purification apparatus according to a second embodiment.
Fig. 4 illustrates a water purification apparatus according to a third embodiment.
Fig. 5 illustrates a water purification apparatus according to a fourth embodiment.
Fig. 6 illustrates a water purification apparatus according to a fifth embodiment.
Fig. 7 illustrates a water purification apparatus according to a sixth embodiment.
Fig. 8 illustrates a control arrangement according to some embodiments.
Fig. 9 illustrates a flow chart of a method for controlling cooling of a RO-membrane according to the second aspect.

### Detailed description

In the following different embodiments of a water purification apparatus and methods for controlling cooling a RO-membrane in the water purification apparatus, will be described. The apparatus comprises a recirculation path, that recirculates reject water from the reverse osmosis process, such that it can be reused in the same process. This water is recirculated with a comparably high speed and will be fed to the RO-membrane again. By cooling the water in the recirculation path, the RO-membrane can be cooled efficiently, as the cooled water will pass through or at least pass alongside the RO-membrane. In any case, the water in the recirculation path will be referred to as recirculating reject water.

When a RO-membrane is heat-disinfected, it is important that it is heated as well as cooled down at a slow rate (e.g. 3°C/min) in order to not damage or unnecessary wear the RO-membrane. Thus, in order to increase the life-time of the RO-membrane, heating as well as cool down of the RO-membrane at and after disinfection should be performed with a limited temperature gradient, for example maximum 3°C/min or 5°C/min, or another temperature gradient as determined by the manufacturer of the RO-membrane. A temperature gradient describes in what direction and at what rate the temperature changes. However, to reduce down-time, the temperature gradient or rate should not be too small. The RO-membrane may be cooled down by taking in fresh water. However, this may contaminate parts that are already heat disinfected. Alternatively, the RO-membrane may be cooled down by itself from the surrounding air. This however takes long time and the timing for starting the water production is delayed, as the RO-membrane should be cooled down before being used for production to achieve desired purification by the RO-membrane. The downtime then becomes large. By cooling the water that is recirculated, the RO-membrane can be cooled in a controlled manner when it is needed, optionally with a desired temperature gradient/rate after heat-disinfection to reduce the time until it can be used again, and also reduce degradation of the RO-membrane as it is exposed to heat for a reduced time. Thus, by controlling the cooling, a predetermined temperate decrease per time unit, e.g. 3°C/minute may be achieved. The RO-membrane may then be cooled with a limited temperature gradient.

The apparatus may be used in warm environments where the surroundings may be very warm, e.g. up to 45°C, and/or the inlet water may be very warm, e.g. up to 35°C. A RO-pump may also increase the temperature of the feed water with up to 7-8°C because the RO-process creates heat during use. There might be components downstream the RO-membrane that cannot stand high temperatures, e.g. temperatures over 80°C, for longer times. There might also be a requirement that the water produced during water purification should not have a temperature over 38°C.

By cooling the water that is recirculated, the RO-membrane and thus the water that is produced may then be cooled with a controlled and desired rate, whereby downstream located components can be spared.

Furthermore, the permeability of a RO-membrane varies with a varying temperature of the water fed to the RO-membrane (that will also vary the temperature of the RO-membrane). Thus, the efficiency of the RO-membrane is temperature dependent. Hot water has lower viscosity than cold water and also has a higher diffusion rate than cold water. The pores of the membrane are expanding at higher temperatures, causing a higher flow through the membrane from feed to product side. Consequently, higher temperatures cause higher permeate flow over the membrane and increased salt passage through the membrane. If both water and salt passage were equally affected by temperature the rejection rate would not change with varying temperature. However, high temperatures make it easier for salts to pass through the membrane than water, resulting in a larger flow of water that contains a proportionally larger amount of dissolved salts. For one example RO-membrane, for every 1°C temperature increase, the salt passage will increase with 6% and the permeate flow rate will increase with 3%. By cooling the water that is recirculated, the RO-membrane is cooled whereby its permeability is reduced and the amount of dissolved salts that pass the membrane will be reduced. Thus, the salt rejection ratio is increased. Hence, the capacity of the apparatus may be increased, and the amount of water loss may be reduced as less water has to be passed to waste. With an increased capacity, the apparatus may be capable to purify inlet water that has a higher concentration of impurities than if the RO-membrane was not cooled. With a decreased temperature during water production, calcium carbonate precipitation on the RO-membrane, thus scaling, is reduced. This may lead to reduced maintenance. A reduced temperature in the recirculation path during production will mitigate bacterial activity in the path, and thus decreased fouling on the RO-membrane, which also implies less maintenance.

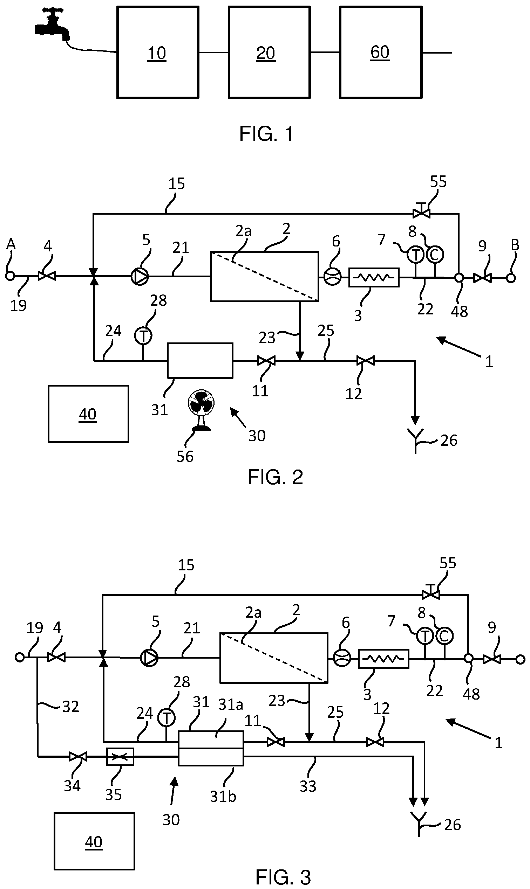

Fig. 1 conceptually illustrates a plurality of modules of a water purification system according to an example embodiment. The plurality of modules comprises a first module 10, a second module 20 and a third module 60. The first module 10 includes a pre-purification step, where water from e.g. a tap is pre-treated. For example, the first module 10 comprises one or several carbon beds for removing chlorine. The first module 10 produces purified inlet water, which is passed to the second module 20. The second module 20 uses reverse osmosis to purify water. The incoming purified inlet water is pressurized using a feed pump 5 and pushed through a RO membrane to produce permeate water. The permeate water is passed to the third module 60, where the permeate water is further treated using a softener or deionizer, for example using electrodeionization (EDI), capacitive deionization (CDI), electrodialysis reversal (EDR), or an ion exchange resin bed. The purified water from the deionizer is referred to as product water. The product water is passed to a consumer point for collection or use by another application. If no deionizer is present, the permeate water may be referred to as product water.

Fig. 2 illustrates a water purification apparatus 1 according to a first embodiment of the disclosure. The water purification apparatus 1, hereinafter referred to as "the apparatus 1", may include second module 20 of the water purification system illustrated in Fig. 1. Alternatively, the apparatus 1 receives water from the tap directly. In some embodiments, the apparatus 1 also includes module 10 and/or module 60.

The apparatus 1 comprises a RO-device 2 comprising a RO-membrane 2a, and a feed pump 5. The apparatus 1 receives inlet water, pre-treated or directly from a source, at a first connection point A at one end of an inlet path 19. The inlet path 19 is at the other end connected to an inlet of the feed pump 5. An inlet valve 4 is arranged to the inlet path 19 and is arranged to control the flow in the inlet path 19 between an open state and a closed state. A feed path 21 is arranged between the feed pump 5 and the RO-device 2, and is connected at one end to an outlet of the feed pump 5 and at the other end to an inlet of the RO-device 2. The feed pump 5 is arranged to receive inlet water via the inlet path 19 from the first connection point A, and to pump feed water via the feed path 5 to the inlet of the RO-device 2. The feed water is typically a mix of inlet water and recirculated water as will be obvious from the following description. The feed pump 5 is for example a magnet drive rotary vane pump. Thus, the RO-device 2 is configured to receive inlet water to be purified from the feed path 21. The RO-device 2 is arranged to create permeate water and reject water from the received pressurized feed water. A permeate path 22 is connected between the RO-device 2 and a second connection point B. Thus, the RO-device 2 is configured to produce permeate water into the permeate path 22. The permeate path 22 is connected at one end to a permeate outlet of the RO-device 2, and the other end defines the second connection point B. The permeate water is passed through the permeate path 22 to the second connection point B. At the connection point B, the permeate water is for example collected for use or passed on to downstream post-treatment. A reject path 23 connects the RO-device 2 with a recirculation path 24 and a waste path 25. Thus, the RO-device 2 is configured to produce reject water into a reject path 23. The reject path 23 is connected at one end to a reject outlet of the RO-device 2, and at the other end to the recirculation path 24 and the waste path 25. The recirculation path 24 is connected between the reject path 23 and the inlet path 19. Thus, the recirculation path 24 is at one end connected to the reject path 23 and at the other end connected to the inlet path 19. Alternatively, the recirculation path 24 is at one end connected to the reject path 23 and at the other end connected to the feed path 21. Thus, the recirculation path 24 is arranged to recirculate reject water from the reject path 23 to the inlet water, thus, either to the inlet path 19 or to the feed path 21. In some embodiments, the recirculation path 24 is connected to the inlet path 19 close to the feed pump 5. In the recirculation path 24, reject water is continuously recirculated, thus referred to as recirculated reject water or recirculated water.

The waste path 25 is connected between the reject path 23 and an outlet connected or directed to a drain 26. Thus, the waste path 25 is at one end connected to the reject path 23, and at the other end connected to the outlet. The outlet may in return be connected to the drain 26 with a hose or similar. Hence, the waste path 25 is configured to pass reject water from the reject path 23 to the drain 26.

The paths mentioned herein includes one or more fluid lines. For example, the reject path 23 may be referred to as a reject fluid line 23, the recirculation path 24 may be referred to as a recirculation fluid line 24, the waste path 25 may be referred to as a waste fluid line 25, the inlet path 19 may be referred to as an inlet line 19, the feed path 21 may be referred to as a feed line 21, and so on.

A valve 11 is arranged to the recirculation path 24. The valve 11 is for example a flow control valve or a pressure control valve. A flow control valve is for example a flow limiting valve such as a restrictor or needle valve, that only let a predetermined flow rate pass. A pressure control valve reduces the input pressure of the water to a desired predetermined pressure at its output. The feed pump 5 is used to create a feed flow rate, and together with the control valve 11 a pressure over the membrane 2. The feed pump 5 and the control valve 11 are configured to provide a certain rejection ratio of the apparatus 1. The control valve 11 is typically configured by a service technician before use of the apparatus 1 such that it provides a certain flow rate in the recirculation path 24 given a certain speed of the feed pump 5. The feed pump 5 creates both flow and pressure. The net driving pressure is generated by the resistance in the RO-membrane 2a and also in the control valve 11. As a result, the feed pump 5 must deliver a large amount of water to build the pressure needed to push the water through the RO-membrane 2a.

The apparatus 1 further comprises a cooling arrangement 30 configured to cool the reject water in the recirculation path 24. The cooling arrangement 30 comprises a cooling device. The cooling device is configured to cool the recirculated reject water in the recirculation path 24.

In the first embodiment exemplified in Fig. 2, the cooling device is exemplified as a heat exchanger 31. In other embodiments, the cooling device comprises a thermoelectric cooler. The heat exchanger 31 in Fig. 2 works as a kind of hot-water radiator, where the hot water in the recirculation path 24 is piped through the heat exchanger 31 via a first internal channel (not shown), the heat exchanger 31 being schematically illustrated as a block. The heat exchanger 31 comprises a first inlet configured to receive recirculating reject water. The heat exchanger 31 further comprises a first outlet configured to output the recirculating reject water received via the first inlet. The first internal channel is connected between the second inlet and the second outlet. Thus, the first internal channel is fluidly connected to the second inlet at one end, and to the second outlet at the other end. A fan 56 is arranged to blow air from the surrounding to the heat exchanger 31 and thereby cool the reject water in the recirculation path 24, thus in the first internal channel. The cooling device may include the fan 56. In some embodiments, the heat exchanger 31 and the fan 56 are integrated parts. The first internal channel may in this embodiment comprise one or more finned channels or tubes, and the recirculated reject water is forced through the one or more finned channels tubes. The one or more finned channels or tubes transfer heat from the recirculating reject water to the air passing around the fins. The fan 56 moves the heated air away from the fins. The heat exchanger 31 thus becomes part of the recirculation path 24 and all the recirculated reject water always has to pass through the heat exchanger 31. In other words, the heat exchanger 31 is arranged in the recirculation path 24 (i.e. in the recirculation fluid line 24).

A control arrangement 40 is configured to control the cooling arrangement 30 to cool the reject water in the recirculation path 24 in order to cool the RO-membrane 2a. The control arrangement 40 is for example configured to turn on the fan 56 when the recirculated reject water should be cooled, and to turn off the fan 56 when the cooling of the recirculated reject water should stop.

A drain valve 12 is arranged to pass a portion of the reject water to the drain 26. The drain valve 12 is arranged to the waste path 25. In some embodiments, the drain valve 12 is manually configurable. The drain valve 12 is in some embodiments a motorized valve, thus, it can be automatically controlled and configured.

The apparatus 1 comprises a plurality of sensors, e.g. to monitor the function of the apparatus 1. The apparatus 1 comprises a flow rate sensor 6 arranged to measure the flowrate of the permeate water in the permeate path 22. The flow rate sensor 6 may be arranged immediately downstream the permeate outlet. A heater 3 is arranged to heat water in the permeate path 22. The heater 3 may comprise a heating rod. The heater 3 is located downstream the flow rate sensor 6. A concentrate sensor 8 is arranged to measure the concentration of the permeate water in the permeate path 22. The concentration sensor 8 is for example a conductivity sensor or conductivity cell. A first temperature sensor 7 is arranged to measure the temperature of the permeate water. The temperature measurement may be used to calibrate the concentration measurement. The first temperature sensor 7 is arranged to sense the temperature of the permeate water downstream the heater 3. In some embodiments, the first temperature sensor 7 is arranged to measure the temperature of the permeate water close to the permeate outlet of the RO-device 2. As the permeate water is passed through the RO-membrane 2a, it can be assumed that the RO-membrane 2a has the same, or close to same, temperature as the permeate water. The temperature measurement of the permeate water may thus be used to control the cooling of the RO-membrane 2a. Thus, the first temperature sensor 7 is a sensor configured to measure a property indicative of a temperature of the RO-membrane 2a. The property is here the temperature. Alternatively, the concentration measured with the first concentration sensor 8 gives an indication of the temperature, as the concentration will increase if the temperature increases. The property is then the concentration, thus conductivity or resistivity. Still alternatively, the flow rate measured with the flow rate sensor 6 may give an indication of the temperature, as the flow rate will increase if the temperature of the RO-membrane 2a. The property is then the flow rate of the permeate water. Still alternatively, the temperature, concentration or flow rate may be measured in any of the feed path, the recirculation path, the reject path or the waste path; and the permeate temperature, concentration or flow rate, respectively, derived from a known relationship between the property measured in any of the mentioned paths and the temperature or concentration or flow rate of the permeate water. The measured property is then provided to a control arrangement 40. The control arrangement 40 is configured to control the cooling arrangement 30 to control the cooling of the RO-membrane 2a based on the measured property. For example, if the permeate temperature is above an upper temperature threshold, the control arrangement 40 controls the fan 56 to turn on. If the permeate temperature is below a lower temperature threshold, the control arrangement 40 controls the fan 56 to turn off. In some embodiments, the control arrangement 40 is configured to control the cooling arrangement 30 to cool the RO-membrane 2a with a certain temperate rate. The measured property should then decrease with a corresponding rate. The control arrangement 40 then controls the cooling, such that the measured property decreases in accordance with the certain temperature rate. The temperature rate is for example a maximum temperature rate as defined by the manufacturer of the RO-membrane 2a. In order to accomplish the certain temperature rate, the fan 56 may be controlled to selectively turn off and on. Alternatively, the speed of the fan 56 may be controlled to increase or to decrease. When the fan 56 is off, the temperature of the RO-membrane 2a will decrease with a low rate. When the fan 56 is on the temperature of the RO-membrane 2a will decrease with a rate that is higher than the low rate. By increasing the speed of the fan 56, the temperature rate will increase and the RO-membrane 2a will be cooled down at a faster rate. Instead of, or in combination with, changing the speed of the fan 56, the temperature rate may be controlled by selectively controlling the fan 56 to be in an on-state and an off-state, and controlling the time the fan 56 is in the different states. Alternatively, the cooling valve 34 is a proportional valve.

A permeate valve 9 is arranged to the permeate path 22 and is arranged to control the flow in the permeate path 22 between an open state and a closed state.

The apparatus 1 further comprises a permeate recirculation path 15 arranged between a recirculation point 48 in the permeate path 22 and the inlet path 19. The permeate recirculation path 15 thus connects the permeate path 22 and the inlet path 19. The recirculation point 48 is located downstream the permeate flow rate sensor 6, the heater 3, the first temperature sensor 7 and the first concentration sensor 8. The recirculation point 48 is further located upstream the permeate valve 9. The permeate recirculation path 15 connects to the inlet path 19 upstream the feed pump 5. A control device 55 is arranged to control a flow rate of the recirculated permeate water in the permeate recirculation path 15. In some embodiments, the control device 55 is a valve, e.g. a motorized valve. In some embodiments, the apparatus 1 comprises an additional flow rate sensor (not shown) arranged to measure a flow rate in the permeate path 22 downstream the recirculation point 48. In some embodiments, the apparatus 1 comprises a pressure sensor (not shown) arranged to measure a pressure in the permeate path 22 downstream the recirculation point 48. The permeate flow rate and the permeate pressure may be used to control the control device 55, such that the flow rate and the pressure in the permeate path 22 satisfies one or more permeate water criteria. Typically, the permeate flow rate is set to a predetermined flow rate, and the pressure is monitored such that it does not rise above a certain pressure level while maintaining the predetermined flow rate.

A "path" is herein defined to be comprised of one or more fluid lines. Alternatively, a path may be part of another line. The path is capable of passing fluid from one end to the other end of the path, wherein the fluid is enclosed in the path. A path may thus be a fluid line.

The control arrangement 40 typically comprises control circuitry such as processor and memory. The processor includes, for example, one or several central processing units (CPUs). The memory includes, for example, one or several memory units. In some embodiments, the memory stores a computer program comprising instructions to cause the apparatus 1 to execute a method for controlling the water purification apparatus 1. Thus, the computer program is stored on a computer-readable medium. The computer-readable medium may also be stored on an external memory such as a flash memory, a cloud-based memory or a memory residing on another computer. The control arrangement 40 also comprises a communication interface, that may be wired or wireless, in order to be able to communicate with components of the apparatus 1 such as sensors, pumps, recirculation mechanisms, valves, a user interface etc.

The control arrangement 40 is for example configured to receive information such as measured sensor values or data from the described components such as concentration sensors, temperature sensors, flow rate sensors, feed pump 5, valves etc. The control arrangement 40 is also configured to send control signals or control data to the described components such as the feed pump 5, the heater, valves etc.

The apparatus 1 typically has to be heat disinfected regularly. During heat disinfection, permeate water is heated by the heater 3 and recirculated via the permeate recirculation path 15 to the inlet water. Typically, no new inlet water is dispatched to the RO-device 2 during the heat disinfection, the inlet valve 4 is closed. Similarly, no water is passed to drain 26, thus, the drain valve 12 is closed. The permeate valve 9 is typically also closed, thus, no permeate water is passed from the apparatus 1 to a consumer or similar. The produced reject water is also hot as it is a stream of water from the feed water. The permeate path 22 up to the recirculation point 48, the permeate recirculation path 15, the recirculation path 24, the feed path 21 and the RO-membrane 2a will then be efficiently heat-disinfected. The water is heated in order to satisfy a disinfection criterion. For example, the permeate water is heated to 95°C for a certain period of time. The control arrangement 40 is configured to control the apparatus 1 to perform such heat disinfection that includes heat disinfection of the RO-membrane 2a and by means of water heated by the heater 3. The heat disinfection thus includes passing the heated water through the RO-membrane 2a. The heat disinfection makes sure that the apparatus 1 is micro-biologically controlled, thus, that bacterial growth is mitigated. The control arrangement 40 is further configured to control the cooling arrangement 30 to cool the reject water in the recirculation path 24 in order to cool the RO-membrane 2a after the heat disinfection of the RO-membrane 2a is finished. As the control arrangement 40 controls the disinfection, it also knows when the disinfection is finished. For example, when the RO-membrane 2a has been heat-disinfected at a certain temperature for a certain time. As soon as the disinfection is finished, the control arrangement 40 starts the cooling, e.g. in the embodiment in Fig. 2 it means to start the fan 56. Starting the fan 56 includes for example sending a control signal or control data to the fan 56. During the cooling, the inlet valve 4, the permeate valve 9 and the drain valve 12 are closed. Thus, in some embodiments, the control arrangement 40 is configured to, during the heat disinfection and/or cooling of the RO-membrane 2a: prevent fresh inlet water to reach the RO-device 2, using the inlet valve 4; prevent permeate water from being passed from the apparatus 1, using a permeate valve 9; and to prevent reject water from being passed to drain, using a drain valve 12. The water is only recirculated in the recirculation path 24 and in the permeate recirculation path 15. The recirculated reject water in the recirculation path 24 is now cooled. The temperature of the permeate water is used to control the cool down of the RO-membrane. A second temperature sensor 28 may be arranged to measure the temperature of the recirculated reject water downstream the heat exchanger 31. The temperature of the cooled reject water, thus measured with the second temperature sensor 28, may be used to control the cooling of the RO-membrane 2a with the heat exchanger 31. Alternatively or in addition, the first temperature sensor 7 is used to control the cooling of the RO-membrane 2a with the heat exchanger 31. Since no fresh water is added to the apparatus 1 after heat disinfection, no re-contamination of the water in the fluid paths will take place, and bacterial growth will be prevented. The RO-membrane 2a will be spared. Also, cooling of the permeate water is performed without introducing fresh water in the permeate path 22, and components downstream the RO-membrane 2a will be spared. Thus, the RO-membrane 2a is cooled without introducing any new water that may contaminate the fluid path. In some embodiments, also the control device 55 is closed. Then the water will recirculate in the path comprising the recirculation path 24, the inlet path 19, the feed path 21 and the reject path 23. No water will then go through the RO-membrane 2a, but the rejected water will pass by the RO-membrane 2a and then cool the RO-membrane 2a. The temperature measured with the second temperature sensor 28 is then used to control the temperature of the cooling.

In some embodiments, the cooling device comprises a thermoelectric cooler instead of the heat exchanger 31. For example, the heat exchanger 31 of any of the embodiments of Figs. 2-5 may be exchanged with a thermoelectric cooler.

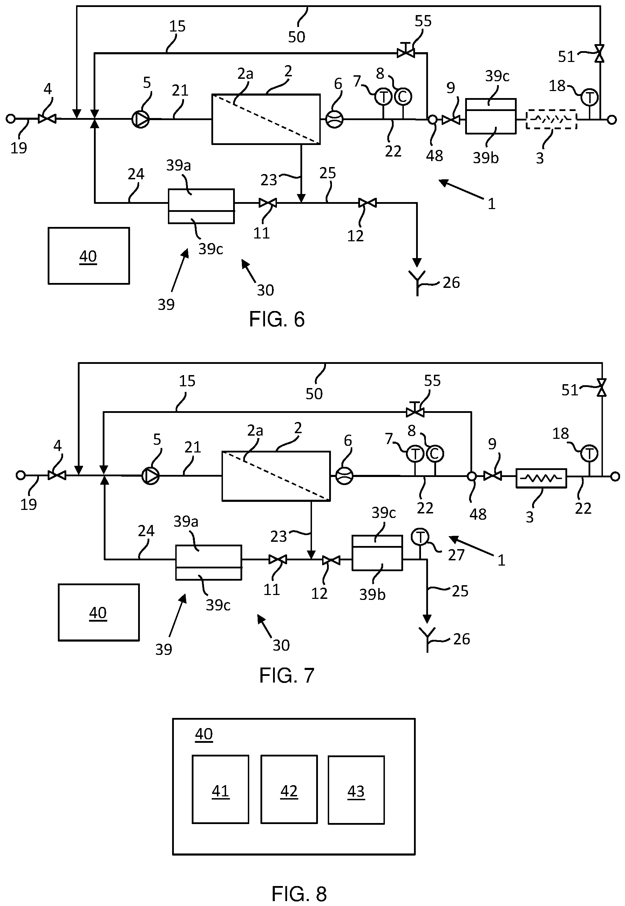

Examples of thermoelectric coolers are illustrated in Figs. 6-7. The thermoelectric cooler operates with the Peltier effect, or thermoelectric effect. The effect creates a temperature difference by transferring heat between two electrical junctions. A voltage is applied across joined conductors to create an electric current. When the current flows through the junctions of the two conductors, heat is removed at one junction and cooling occurs. Heat is deposited at the other junction. A typical single-state cooler comprises two ceramic plates with elements of p-type and n-type semiconductor material between the plates. The thermoelectric cooler typically has the best cooling efficiency when the temperature difference between the warm side and the cool side is as small as possible.

In the second embodiment, if the heat exchanger 31 is exchanged with a thermoelectric cooler, the plate that is cooled is arranged to the recirculation path 24, and the plate that is warmed is arranged in the vicinity of the fan 56. A heat sink may be arranged to the plate that is warm, to dissipate the heat better. The recirculating water in the recirculation path 24 may be passed via a first path that is arranged to the plate that is cooled, to efficiently transfer the coolness to the recirculating water.

Fig. 3 illustrates a second embodiment of the apparatus 1. The apparatus 1 in the second embodiment may comprise all or at least some of the features illustrated in the first embodiment. The apparatus 1 according to the second embodiment also comprises a cooling arrangement 30 configured to cool the reject water in the recirculation path 24. The cooling arrangement 30 comprises a heat exchanger 31. The heat exchanger 31 is configured to cool the recirculated reject water in the recirculation path 24. However, the heat exchanger 31 according to the second embodiment is arranged to exchange heat from the recirculated water to another fluid. For that purpose, the heat exchanger 31 comprises a first internal channel 31a and a second internal channel 31b, schematically illustrated as blocks in Fig. 3. As in the first embodiment, the heat exchanger 31 comprises a first inlet configured to receive recirculating water. The heat exchanger 31 further comprises a first outlet configured to output the recirculating water received via the first inlet. The first internal channel 31a is connected between the second inlet and the second outlet. Thus, the first internal channel 31a is fluidly connected to the second inlet at one end, and to the second outlet at the other end. The heat exchanger 31 also comprises a second inlet configured to receive cooling water. The cooling water is heated by heat exchange with the recirculating water in the first internal channel 31a. The heat exchanger 31 further comprises a second outlet configured to output the heated cooling water received via the first inlet. The second internal channel 31b is connected between the second inlet and the second outlet. Thus, the second internal channel 31b is fluidly connected to the second inlet at one end, and to the second outlet at the other end. The second embodiment also comprises a cooling arrangement 30 including a cooling path configured to direct water to the cooling device, to be used as a cooling liquid by the cooling device, here the heat exchanger 31. In this embodiment, the cooling path comprises a first fluid path 32 arranged between the inlet path 19 and the second inlet of the heat exchanger 31. Thus, the first fluid path 32 is at one end fluidly connected to the inlet path 19. The first fluid path 32 is further at the other end fluidly connected to an inlet of the heat exchanger 31. Thus, the cooling path is configured to direct inlet water from the inlet path 19 to the heat exchanger 31. The inlet water is to be used as a cooling liquid by the heat exchanger 31. Alternatively, another source of cooling liquid is used. The first fluid path 32 is arranged with a cooling restrictor 35 configured to restrict the flow rate of the water in the first fluid path 32, and thus the flow of inlet water to the heat exchanger 31. The first fluid path 32 is also arranged with a cooling valve 34, e.g. an on/off valve, arranged to selectively close and open the flow in the first fluid path 32. The cooling path further comprises a second fluid path 33 arranged between the second outlet of the heat exchanger 31, and the drain 26. Thus, the second fluid path 33 is at one end fluidly connected to the second outlet of the heat exchanger 31. The second fluid path 33 further has an output directed to or connected to the drain 26. Thus, the cooling path is further configured to direct the inlet water used as the cooling liquid by (and thus heated by the recirculated reject water) and outputted from (in other words, delivered from) the heat exchanger 31, to a drain 26. The heat exchanger 31 typically operates with counter current flows, thus, the cooling fluid and the recirculating water are counter current flows and flows in opposite directions in the heat exchanger 31. As in the first embodiment, the control arrangement 40 is configured to control the cooling arrangement 30 in the second embodiment to control the cooling of the RO-membrane 2a based on the measured property. The cooling is started by opening the cooling valve 34, by means of the control arrangement 40, whereby inlet water will flow through the heat exchanger 31. The cooling is stopped by closing the cooling valve 34. The control arrangement 40 is configured to send one or more control signals to the cooling valve 34, in order to start and stop, respectively, the cooling valve 34. In some embodiments, the control arrangement 40 is configured to control the cooling arrangement 30 to cool the RO-membrane 2a with a certain temperate rate. The measured property should then decrease with a corresponding rate. The control arrangement 30 then controls the cooling, such that the measured property decreases in accordance with the certain temperature rate. The temperature rate is for example a maximum temperature rate as defined by the manufacturer of the RO-membrane 2a. In order to accomplish the certain temperature rate, the cooling valve 34 may be controlled to selectively open and close. Alternatively, the opening degree of the cooling valve 34 is controlled to increase or to decrease. When the cooling valve 34 is closed, the temperature of the RO-membrane 2a will decrease with a low rate. When the cooling valve 34 is fully open, the temperature of the RO-membrane 2a will decrease with a high rate, that is higher than the low rate. By controlling, thus changing the opening degree of the cooling valve 34, the temperature rate will change correspondingly. For example, if the opening degree is increased, the temperature rate of the cooling of the RO-membrane 2a will increase, and the RO-membrane 2a will be cooled down with a faster rate. Instead of changing the opening degree of the cooling valve 34, the temperature rate may be controlled by selectively controlling the cooling valve 34 to be in an open state and a closed state and controlling the time the cooling valve 34 is in the different states. The control arrangement 40 may use pulse width modulation (PWM) to control the cooling valve 34.

As in the first embodiment, the control arrangement 40 is further configured to control the cooling arrangement 30 to cool the reject water in the recirculation path 24 in order to cool the RO-membrane 2a after the heat disinfection of the RO-membrane 2a is finished. Thus, the cooling arrangement 30 is controlled to cool down the RO-membrane 2a. During the cooling, the inlet valve 4, the permeate valve 9 and the drain valve 12 are closed.

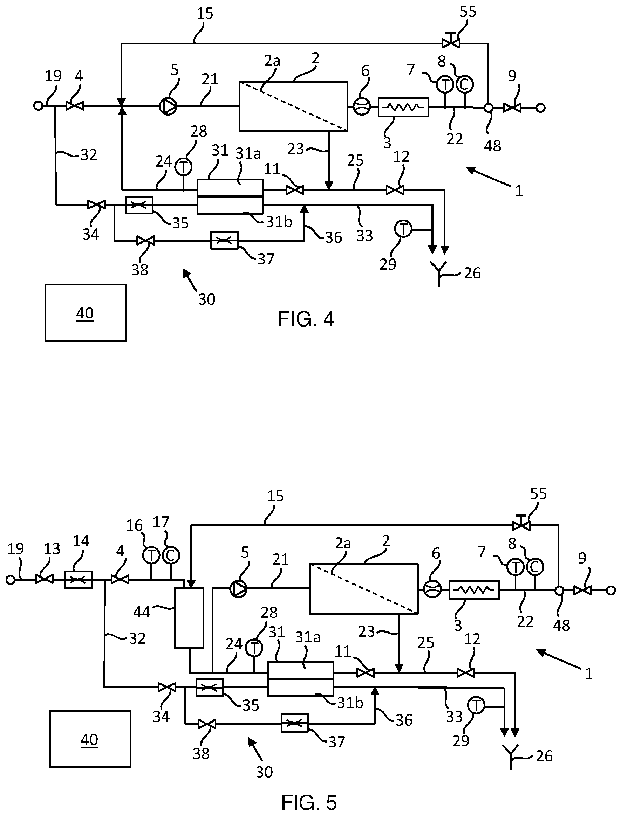

Fig. 4 illustrates an apparatus 1 according to a third embodiment. In addition to the features of the second embodiment, the cooling path of the third embodiment comprises a bypass path 36 configured to bypass the heat exchanger 31. The bypass path 36 is configured to direct inlet water into the cooling path downstream the heat exchanger 31 in order to cool the reject water being passed to drain 26. Thus, the bypass path 36 is at one end connected to the first fluid path 32 and at the other end connected to the second fluid path 33. The bypass path 36 is thus fluidly connected between the first fluid path 32 and the second fluid path 33. Alternatively, the bypass path 36 is configured to direct inlet water into the waste path 25. The bypass path 36 is then at one end connected to the first fluid path 32 and at the other end connected to the waste path 25. The bypass path 36 is thus fluidly connected between the first fluid path 32 and the waste path 25. A bypass restrictor 37 is arranged to restrict the flow rate in the bypass path 36. A bypass valve 38 is arranged to control the flow rate in the bypass path 36, for example an on/off valve, arranged to selectively close and open the flow in the bypass path 36. Alternatively, the bypass valve 38 is a control valve, that can be controlled to provide various constant flow rates. By passing some of the inlet water in the first fluid path 32 pass the heat exchanger 31 via the bypass path 36, the inlet water that is passed to the heat exchanger 31 and then heated, can be cooled by colder inlet water. Thereby the risk of being burnt by the heated water passed to drain is reduced.

Fig. 5 illustrates a fourth embodiment of the apparatus 1. The fourth embodiment comprises the same features as described in relation to the third embodiment. In addition, the fourth embodiment comprises a tank 44. The tank 44 is arranged in the inlet path 19 and is thus fluidly connected with the inlet path 19. The tank 44 is arranged upstream the feed pump 5. The permeate recirculation path 15 is configured to recirculate permeate water into the tank 44. One end of the permeate recirculation path 15 is thus fluidly connected to the tank 44. The other end of the permeate recirculation path 15 is still fluidly connected to the permeate path 22 at the recirculation point 48. In addition to the already described features, the apparatus 1 according to the fourth embodiment also comprises an inlet restrictor 13 arranged to restrict the flow rate in the inlet path 19. The fourth embodiment also comprises a further inlet valve 14, e.g. an on/off valve, arranged to selectively close and open the flow in the inlet path 19. The inlet restrictor 13 and/or the further inlet valve 14 are arranged upstream the connection point of the cooling path. The fourth embodiment also comprises an inlet temperature sensor 16 and an inlet concentration sensor 17. The inlet temperature sensor 16 is arranged to measure the temperature of the inlet water. The inlet concentration sensor 17 is arranged to measure the concentration of the inlet water. These sensors are for example arranged to the inlet path 19. The recirculation path 24 is connected to the inlet path 19 downstream the tank 44. The inlet path 19 may thus include several fluid lines of which one is fluidly connected between an outlet of the tank 44 and an inlet of the feed pump 5. The recirculation path 24 (or line) is fluidly connected to this one fluid line of the inlet path 19. Another fluid line of the inlet path 19 is fluidly connected to an inlet of the tank 44 upstream the tank 44. The inlet restrictor 13, the further inlet valve 14, the inlet temperature sensor 16 and the inlet concentrate sensor 17 are arranged to this other fluid line of the inlet path 19. One or more of the tank 44, the inlet restrictor 13, the further inlet valve 14, the inlet temperature sensor 16 and the inlet concentration sensor 17 may also be arranged in similar way to the apparatuses 1 according to any of the other embodiments as descried herein. When disinfecting the RO-membrane 2a, also the tank 44 will be heat disinfected. If taking in fresh water after the heat disinfection, the previously heat disinfected tank 44 will be re-contaminated by bacteria in the feed water, and these bacteria will then be allowed to grow in the tank 44. The tank 44 is also connected to the reject side of the RO-membrane 2a, and some bacteria may pass the RO-membrane 2a and form colonies on the permeate side of the RO-membrane 2a.

Fig. 6 illustrates an apparatus 1 according to a fifth embodiment. The apparatus 1 according to the fifth embodiment mainly comprises the same features as the second embodiment, except that the cooling arrangement 30 here comprises a thermoelectric cooler 39 and the permeate path 22 is used as a cooling path. The permeate water is thus used as cooling water. The heater 3 may also be removed, or alternatively change place to downstream the recirculation point 48. The thermoelectric cooler 39 is illustrated with blocks, where a first block 39a comprises a first internal channel. The first internal channel is part of the recirculation path 24. A second block 39b comprises a second internal channel. The second internal channel is here part of the permeate path 22 downstream the recirculation point 48. The third block 39c is arranged between the first block 39a and the second block 39b. The third block 39c comprises at least two ceramic plates with elements of p-type and n-type semiconductor material between the plates. Thus, one ceramic plate is arranged close to the first internal channel in order to remove heat, that is cool, the first internal channel and thereby the recirculated water inside. Another ceramic plate is arranged close to the second path in order to heat the second path. Thus, the thermoelectric cooler 39 is configured to transfer heat from the recirculating reject water in the recirculation path 24 to another fluid flow in the apparatus 1. The other fluid is in the fifth embodiment the permeate water in the permeate path 22 downstream the recirculation point 48. Thereby the permeate water can be heated to a suitable temperature for the user, for example 30°C, during production of permeate water. At the same time, the recirculated water is cooled whereby the RO-membrane 2a is cooled and becomes more efficient. The feed pump 5 gives away heat when operating, and by cooling the recirculating water, the warming of the feed water can be counteracted. To achieve a certain temperature of the permeate water, the temperature of the permeate water is typically measured with a third temperature sensor 18 and feed back to the control arrangement 40. The third temperature sensor 18 is arranged downstream the thermoelectric cooler 39 in the permeate path 22. The control arrangement 40 can then control the cooling arrangement 40 such that the desired temperature can be achieved. Typically, the control arrangement 40 controls the voltage over the thermoelectric cooler 39. By increasing the voltage, the heat transfer is increased. In other words, the apparatus 1 is configured to measure a property indicative of a temperature of the permeate water downstream a point of heat transfer to the permeate water. The control arrangement 40 is configured to control the cooling arrangement based on the measured property, in order to achieve a predetermined temperature of the permeate water. Thus, it is possible to control the temperature of the permeate water by transferring energy, thus heat, from the recirculation path 24 to the permeate path 22. However, the permeate flow rate will put a limitation on how much the recirculating water can be cooled. The higher permeate flow rate, the more energy can be used to cool down the recirculating water.

The thermoelectric cooler 39 typically operates with counter current flows, thus, the cooling fluid and the recirculating water are counter current flows and flows in opposite directions in the thermoelectric cooler 39.

The apparatus 1 also comprises another recirculation path 50 arranged between the permeate path 22 downstream the thermoelectric cooler 39 and the optional heater 3, and the inlet path 19 (or tank 44, see Fig. 5). The optional heater 3 or the thermoelectric cooler 39 may be used to perform a heat disinfection as has been previously explained. The permeate water is then heated by the optional heater 3 or the thermoelectric cooler 39 and passed via the other recirculation path 50 to the inlet path 19 and the RO-membrane 2a. Thus, the thermoelectric cooled 39 may be used for heating the permeate water in order to perform a heat disinfection of the apparatus 1. The heat disinfection may except for what has already been described regarding heat disinfection, also include a port disinfection. One or more ports (not shown) may be located in the permeate path 22 or downstream the permeate path 22, and these ports should also be disinfected at regular intervals. The port disinfection is performed by heating water with the thermoelectric cooler 39 and directing the heated water along the permeate path 22 to the one or more ports.

Fig. 7 illustrates an apparatus 1 according to a sixth embodiment. The apparatus 1 according to the sixth embodiment mainly comprises the same features as the fifth embodiment, except that the waste path 25 is used as a cooling path instead of the permeate path 22. The reject water that is passed to drain 26 is thus used as cooling water. Thus, the thermoelectric cooler 39 is configured to transfer heat from the recirculating reject water in the recirculation path 24 to reject water being passed to drain. The heater 3 is arranged downstream the recirculation point 48. In some embodiments, the control arrangement 40 is configured to control the apparatus 1 to perform heat disinfection of the RO-membrane 2a by means of water heated by a heater 3, wherein the heat disinfection includes passing the heated water through the RO-membrane 2a. The heat disinfection comprises directing the permeate water heated by the heater 3 to the other permeate recirculation path 50, as has been described with reference to the previous figures. The control arrangement 40 is further configured to control the cooling arrangement 30 to cool the water in the recirculation path 24 in order to cool the RO-membrane 2a after the heat disinfection of the RO-membrane 2a is finished. The control arrangement 40 controls the thermoelectric cooler 39 by configuring a voltage level over the thermoelectric cooler 39.

When the RO-membrane 2a becomes cooler, it creates permeate water that is more purified than if the RO-membrane 2a was warmer, provided that the feed pump 5 operates at the same speed and the inlet water has the same conductivity. Thus, by controlling cooling of the RO-membrane 2a, the purity of the permeate water can be controlled. The permeate concentration, that is the conductivity or the resistivity, can thus be used as a control parameter for the cooling. However, care should be taken such that the water passed to drain does not become too hot in order not to cause harm to any user. Therefore, the temperature of the reject water being passed to drain may be monitored. In other words, in some embodiments, the apparatus 1 comprises a concentration sensor 8 configured to measure the concentration of the permeate water. Also, in some embodiments, the apparatus 1 comprises a fourth temperature sensor 27 configured to measure a property indicative of the temperature of the reject water being passed to drain downstream the thermoelectric cooler 39. The control arrangement 40 is further configured to control cooling of the recirculating reject water in the recirculation path 24 based on the concentration of the permeate water and the property of the reject water being passed to drain. Typically, the concentration should meet a certain permeate concentration value or be within a certain interval, as long as the temperature of the reject water does not go beyond a temperature limit, e.g. 50°C. Thus, it is possible to control the quality of the permeate water by transferring energy, thus heat, from the recirculation path 24 to the waste path 25. However, the flow rate in the waste path 25 will put a limitation on how much the recirculating water can be cooled. The higher the reject water flow rate in the waste path 25, the more energy can be used to cool down the recirculating water.

The cooling may in addition be performed at another path, for example the permeate path 22 downstream the RO-device 2. This cooling may be performed in a similar way, e.g. by means of cooling device arranged in the permeate path 22.

Fig. 8 illustrates a control arrangement 40 according to some embodiments. The control arrangement 40 comprises a processor 41 and a memory 42. The processor 41 may comprise one or more processing units, e.g. central processing units, CPUs. The memory 42 may comprise one or more memory units. The memory 42 may comprise a computer program product comprising instructions to cause the apparatus 1 according to any one of the embodiments herein to perform a method as will be described in the following. The memory 42 is for example a computer-readable medium having stored thereon the computer program. The control arrangement 40 also comprises a communication interface 43 configured to receive and send signals and data. The control arrangement 40 is for example used in the above mentioned apparatuses.

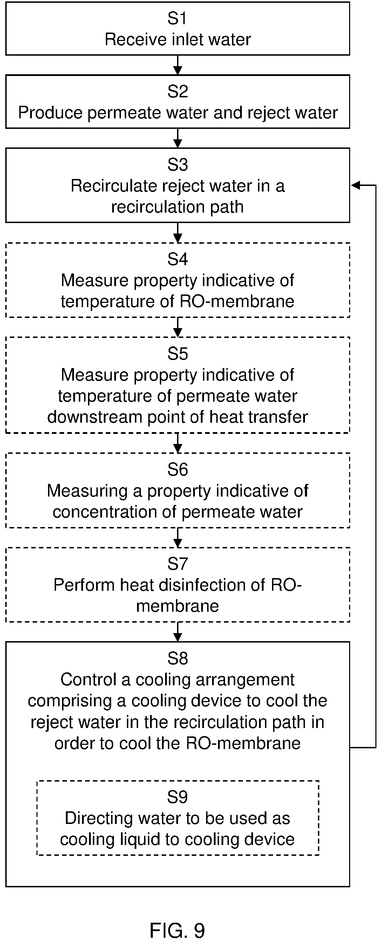

Fig. 9 illustrates a flow chart of a method for cooling a RO-membrane 2a in a water purification apparatus according to the second aspect. The apparatus is for example any one of the apparatuses as has been described in the previous embodiments. The method will now be described with reference to the flow chart in Fig. 9, wherein the method comprises receiving S1 inlet water to be purified to the RO-device 2 from an inlet path 19. The inlet water is for example received directly from a tap or has been cleaned in a pre-treatment module, e.g. the first module 10 illustrated in Fig. 1. The method comprises producing S2 permeate water into a permeate path 22 and reject water into a reject path 23. Typically, a feed pump 5 is pumping the inlet water to the RO-membrane 2a as feed water, whereby some of the feed water will be forced through the RO-membrane 2a and become permeate water, and some will be rejected and thus not go through the RO-membrane and thus become reject water. Part of the reject water is recirculated to the inlet water, e.g. the inlet path 19. Thus, the method comprises recirculating S3 reject water from the reject path 23 to the inlet water via the recirculation path 24. The remaining part of the reject water is passed to drain via the waste path 25.

The method further comprises controlling S8 a cooling arrangement 30 comprising a cooling device 31, 39 to cool the reject water in the recirculation path 24 with the cooling device 31, 39, in order to cool the RO-membrane 2a. In some embodiments, the controlling S8 comprises activating a fan, for example the fan 56 in Fig. 2, when the recirculating water should be cooled. The recirculating water should be cooled for example when a heat disinfection is completed, and/or continuously when permeate water is produced. In some embodiments, the method comprises measuring S4 a property indicative of a temperature of the RO-membrane 2a. The property is for example a temperature of the permeate water, the reject water or the feed water. Alternatively, the property is a concentration of the permeate water, the reject water or the feed water. Still alternatively, the property is a flow rate of the permeate water, the reject water or the feed water. A property of the permeate water may be derived from a property of the reject water or the feed water and a known relation therebetween. The controlling S8 then comprises controlling cooling of the RO-membrane 2a with the cooling arrangement 30 based on the measured property. The property and the temperature of the RO-membrane typically has a proportional relationship. Thus, they vary directly with each other. For example, the permeate temperature, permeate concentration or permeate flow rate may be used as a control parameter for the cooling. The property should then meet a certain criterion, for example, the temperature of the RO-membrane should decrease with a certain rate, for example 3°C/minute. Thus, in some embodiments, the controlling S8 comprises controlling the cooling arrangement 30 to reduce the temperature of the RO-membrane 2a with a certain temperature rate, based on the measured property. Alternatively, the temperature of the RO-membrane 2a indicated by the property should not go beyond an upper temperature limit, be maintained within a certain interval or at a certain temperature target. The temperature of the RO-membrane 2a indicated by the property may also be maintained at a certain trajectory, e.g. a certain temperature trajectory that meets a certain temperature decrease rate. The cooling arrangement 30 is controlled such that the desired criterion or a plurality of the criteria is achieved. When for example the desired temperature of the RO-membrane 2a has been achieved, the cooling is stopped.

In some embodiments, the controlling S8 comprising controlling cooling of the recirculated reject water in the recirculation path 24 using the cooling device. The cooling device comprises for example a heat exchanger 31 or a thermoelectric cooler 39. The controlling S8 is typically performed by sending one or more control signals or control data to fan 56 to start or stop the fan 56, to set it to a certain speed etc., or sending one or more control signals or control data to cooling valve 34 to open or close the cooling valve 34, to provide a certain flow rate, etc, or if the cooling device comprises a thermoelectric cooler 39, sending one or more control signals or control data to the thermoelectric cooler 39, from the control arrangement 40. The one or more control signals may for example include one or more of a start signal, a stop signal, an open signal, a close signal, an on signal, an off signal, an activation signal, a deactivation signal, a rate signal indicate of desired rate etc. The one or more control data may for example include one or more of start data, stop data, open data, close data, on data, off data, activation data, deactivation data, rate data indicate of a desired rate etc.

In some embodiments, the controlling S8 comprises directing S9 water to the cooling device 31, 39 via a cooling path 22, 25, 32, 33, to be used as a cooling liquid by the cooling device 31, 39. In Fig. 3, the cooling path is an extra path added for the purpose of using inlet water as cooling liquid. Thus, the directing S9 then comprises directing inlet water from the inlet path 19 to the cooling device 31, 39 via the cooling path 32 to be used as a cooling liquid by the cooling device 31, 39, and directing inlet water used as the cooling liquid by the cooling device 31, 39 (and thus heated by the recirculated reject water in the cooling device 31, 39) and outputted from the cooling device 31, 39 to the drain 26. The directing is controlled by controlling the cooling valve 34 to an open state when the recirculating water should be cooled. Thereby inlet water will flow through the cooling device 31, 39. To terminate the cooling, the cooling valve 34 is closed. For example, the recirculating water is cooled by means of a heat-exchanger 31, that is added to the recirculation path 24. Thus, the recirculated reject water in a recirculation path is cooled by means of fresh water. When the RO-membrane 2a should be cooled down in a controlled way, cooling valve 34 opens in order to cool the recirculation path 24 to the RO-membrane 2a. The opening periods may be adapted such that the cool down rate is adapted to the RO-membrane 2a specifications and the accomplished temperature of the RO-membrane 2a is measured e.g. using the first temperature sensor 7, that is used as feedback by the control arrangement 40. When a desired temperature of the RO-membrane 2a is reached, the cooling may be stopped (for example when cooling after a heat disinfection), or continued to maintain the desired temperature (for example when cooling during production of purified water). The cooling of the RO-membrane 2a may alternatively be stopped after a predetermined time period, thus, the cooling of the RO-membrane 2a is maintained for a certain time period. The heated fresh inlet water is passed to drain 26. It is beneficial to cool the recirculated water, as the water in the recirculation path 24 has a low pressure, compared to other paths in the apparatus 1, and thereby more easily is passed through a heat exchanger 31. The cooling is for example performed after heat disinfection, to control the cool-down of the RO-membrane 2a, or during production of purified water.

The inlet water heated in the cooling device 31, 39 may become very warm. In order to cool the heated water, inlet water may be used to cool the inlet water that has been heated. To cool the heated inlet water, some of the inlet water is bypassed the cooling device 31, 39, and is combined with the heated inlet water downstream the cooling device 31, 39. Thus, in some embodiments, the method comprises bypassing the cooling device 31, 39 thereby directing inlet water into the waste path 25 or into the cooling path 33 downstream the cooling device 31, 39 in order to cool the reject water being passed to drain 26. In order to bypass the cooling device 31, 39, the bypass valve 38 is controlled to an open state or to a certain level. The inlet water may thus be directed into both the bypass path 36 and the cooling device 31 at the same time, or alternately into the bypass path 36 or the cooling device 31. By mixing the heated inlet water with fresh inlet water, the temperature of the water passed to drain can be limited. For example, the temperature of the water passed to drain shall not go beyond a maximum drain temperature. A fifth temperature sensor 29 may be arranged to measure the temperature in the cooling path 33 downstream the cooling device 31, and the cooling arrangement 30 controlled such that the temperature measured with the fifth temperature sensor 29 does not go beyond the maximum drain temperature.

As previously explained, the apparatus 1 may be regularly heat disinfected including heat disinfection of the RO-membrane 2a. Thus, in some embodiments, the method comprises performing S6 heat disinfection of the RO-membrane 2a by means of water heated by a heater 3, wherein the heat disinfection includes passing the heated water through the RO-membrane 2a. When the heat disinfection is completed, it is desired to cool down the RO-membrane 2a with a certain rate. The method then comprises controlling S8 the cooling arrangement 30 to cool the water in the recirculation path 24 in order to cool the RO-membrane 2a after the heat disinfection of the RO-membrane 2a is completed. The controlling S8 may then comprise controlling the cooling valve 34 and/or the bypass valve 38 such that a desired cooling effect is achieved. For example, if the cooling effect should be increased, the cooling valve 34 is open more time or to a greater degree than if the cooling effect should be decreased. During the heat disinfection and the cooling of the RO-membrane 2a, the inlet valve 4, the permeate valve 9 and the drain valve 12 are typically closed, such that the same water is circulated and no fresh inlet water is passed to the RO-device 2. Thus, in some embodiments, the controlling S8 comprises, during the heat disinfection and/or the cooling of the RO-membrane 2a: preventing fresh inlet water to reach the RO-device 2, using the inlet valve 4; preventing permeate water from being passed from the apparatus 1, using the permeate valve 9; and preventing reject water from being passed to drain, using a drain valve 12.

In some embodiments, the cooling arrangement 30 comprises a thermoelectric cooler 39. The controlling S8 may then comprise controlling heat transfer from the recirculating reject water in the recirculation path 24 to another fluid flow in the apparatus 1, by means of the thermoelectric cooler 39. For example, the method may comprise transferring heat to the inlet water in the cooling path (Figs. 3, 4 and 5), to the permeate water in the permeate path (Fig. 6) or to the reject water in the waste path (Fig. 7). Thus, in some embodiments, the controlling S8 comprises controlling heat transfer from the recirculating reject water in the recirculation path 24 to permeate water in the permeate path 22, by means of the thermoelectric cooler 39. In some embodiments, the method comprises measuring S5 a property indicative of a temperature of the permeate water downstream a point of heat transfer to the permeate water. The property is for example the temperature of the permeate water. Alternatively, the property is the temperature of the reject water or the feed water. Still alternatively, the property is a concentration of the permeate water or the reject water, or a flow rate of the permeate water. The controlling further comprises controlling the heat transfer based on the measured property, in order to achieve a predetermined temperature of the permeate water.

The heat may alternatively be distributed to the reject water being passed to drain. Thus, in some embodiments, the controlling S8 comprises controlling heat transfer from the recirculating reject water in the recirculation path 24 to reject water being passed to drain, by means of the thermoelectric cooler 39.

As the cooling of the RO-membrane 2a makes the RO-membrane 2a more efficient, the cooling may be controlled by using the concentration of the permeate water as a control parameter. Thus, in some embodiments, the method comprises measuring S6 a property indicative of the concentration of the permeate water. This property is for example the conductivity of the permeate water. When the heat is distributed via water passed to drain, it is important to make sure that the water does not become too hot, otherwise it might burn the user. Thus, in some embodiments, the method further comprises measuring S7 a property indicative of the temperature of the reject water being passed to drain downstream the thermoelectric cooler 39. This temperature is typically measured with the fourth temperature sensor 27. The controlling S8 then comprises controlling cooling of the recirculating water in the recirculation path 24, and thus cooling of the RO-membrane 2a, based on the concentration of the permeate water and the temperature of the reject water being passed to drain. However, instead of the concentration of the permeate water as a control parameter, the temperature of the permeate water may be used as a control parameter. In another alternative embodiment, only the temperature of the reject water passed to drain (e.g. measured with temperature sensor 27 is used as the measured property to control cooling of the RO-membrane 2a.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the scope of the appended claims.

## Claims

1. A water purification apparatus (1) comprising:
a RO-device (2) comprising a RO-membrane (2a), wherein the RO-device (2) is configured to receive inlet water to be purified from an inlet path (19), and produce permeate water into a permeate path (22) and reject water into a reject path (23),
a recirculation path (24) arranged to recirculate reject water from the reject path (23) to the inlet water,
a waste path (25) arranged to pass reject water from the reject path (23) to a drain (26);
a cooling arrangement (30) comprising a cooling device (31, 39), wherein the cooling arrangement (30) is configured to cool the recirculating reject water in the recirculation path (24) with the cooling device (31, 39);
a feed pump (5) arranged to receive the inlet water via the inlet path (19) and to pump feed water via a feed path (21) to an inlet of the RO-device (2);
a permeate recirculation path (15) fluidly connecting the permeate path (22) at a recirculation point, and the inlet path (19);
a control device (55) arranged to the permeate recirculation path (15) to control the flow in the permeate recirculation path (15);
a heater (3) arranged to heat permeate water in the permeate path (22) upstream the recirculation point;
a permeate valve (9) arranged to the permeate path (22) and arranged to control the flow in the permeate path (22) between an open state and a closed state, wherein the recirculation point is (48) is located upstream the permeate valve (9);
an inlet valve (4) arranged to the inlet path (19) and arranged to control the flow in the inlet path (19) between an open state and a closed state;
a drain valve (12) arranged to the waste path (25);
a sensor (7, 8, 18, 28) configured to measure a property indicative of a temperature of the RO-membrane;
a control arrangement (40) configured to
control the apparatus (1) to perform heat disinfection of the RO-membrane (2a) by means of permeate water heated by the heater (3), wherein the heat disinfection includes passing the heated permeate water via the permeate recirculation path (15) through the RO-membrane (2a); and control the cooling arrangement (30) to cool the recirculating reject water in the recirculation path (24) in order to cool the RO-membrane (2a) to achieve a desired temperature of the RO-membrane (2a) based on the measured property indicative of a temperature of the RO-membrane after the heat disinfection of the RO-membrane (2a) is completed,
wherein the control arrangement (40) is configured to prevent fresh inlet water to reach the RO-device (2), using the inlet valve (4);
prevent permeate water from being passed from the apparatus (1), using the permeate valve (9); and to prevent reject water from being passed to drain, using the drain valve (12), during the heat disinfection and cooling of the RO-membrane (2a).

2. The water purification apparatus (1) according to claim 1, wherein the control arrangement (40) is configured to control the cooling arrangement (30) to reduce the temperature of the RO-membrane (2a) with a desired temperature rate, based on the measured property.

3. The water purification apparatus (1) according to any one of the preceding claims, wherein the cooling arrangement (30) comprises a cooling path (32, 33) arranged to direct inlet water from the inlet path (19) to the cooling device (31, 39) to be used as a cooling liquid by the cooling device (31, 39), wherein the cooling path (32, 33) further is configured to direct the inlet water used as the cooling liquid by the cooling device (31, 39) and outputted from the cooling device (31, 39), to drain (26).

4. The water purification apparatus according to claim 3, wherein the cooling path (32, 33) comprises a bypass path (36) arranged to bypass the cooling device (31, 39) and direct inlet water into the waste path (25) or cooling path (33) downstream the cooling device (31, 39) in order to cool the reject water being passed to drain (26).

5. The water purification apparatus (1) according to any one of the preceding claims, wherein the cooling device (31, 39) comprises a heat exchanger (31) arranged to cool the reject water in the recirculation path (24).

6. The water purification apparatus (1) according to any one of the claims 1 to 5, wherein the cooling device (39) comprises a thermoelectric cooler (39).

7. The water purification apparatus (1) according to claim 6, wherein the thermoelectric cooler (39) is arranged to transfer heat from the reject water in the recirculation path (24) to permeate water in the permeate path.

8. The water purification apparatus (1) according to claim 7, wherein the apparatus (1) comprises a sensor (6, 7, 8) arranged to measure a property indicative of a temperature of the permeate water downstream a point of heat transfer to the permeate water, wherein the control arrangement (40) is configured to control the cooling arrangement (30) based on the measured property, in order to achieve a predetermined temperature of the permeate water.

9. The water purification apparatus (1) according to any one of the claims 6 to 8, wherein the thermoelectric cooler (39) is arranged to transfer heat from the recirculating reject water in the recirculation path (24) to reject water being passed to drain.

10. The water purification apparatus (1) according to claim 9, comprising a concentration sensor (8) arranged to measure the concentration of the permeate water, and a temperature sensor (27) arranged to measure a property indicative of the temperature of the reject water being passed to drain downstream the thermoelectric cooler (39), wherein the control arrangement (40) is configured to control cooling of the recirculating reject water in the recirculation path (24) based on the concentration of the permeate water and the property of the reject water being passed to drain.

11. A method for cooling a RO-membrane (2a) in a water purification apparatus (1) according to any one of the claims 1 to 10, the method comprising:
receiving (S1) inlet water to be purified to the RO-device (2) from an inlet path (19);
producing (S2) permeate water into a permeate path (22) and reject water into a reject path (23),
recirculating (S3) reject water from the reject path (23) to the inlet water via a recirculation path (24);
performing (S6) heat disinfection of the RO-membrane (2a) by means of water heated by a heater (3), wherein the heat disinfection includes passing the heated water via a permeate recirculation path through the RO-membrane (2a); and
controlling (S8) a cooling arrangement (30) comprising a cooling device (31, 39) to cool the recirculating reject water in the recirculation path (24) with the cooling device (31, 39), in order to cool the RO-membrane (2a) after the heat disinfection of the RO-membrane (2a) is completed, wherein the performing (S6) heat disinfection and controlling (S8) comprises, during the heat disinfection and cooling of the RO-membrane (2a):
preventing fresh inlet water to reach the RO-device (2), using an inlet valve (4);
preventing permeate water from being passed from the apparatus (1), using a permeate valve (9); and
preventing reject water from being passed to drain, using a drain valve (12).

## Patentansprüche

1. Wasserreinigungsvorrichtung (1), die Folgendes umfasst:
eine RO-Vorrichtung (2), umfassend eine RO-Membran (2a), wobei die RO-Vorrichtung (2) ausgelegt ist zum Aufnehmen von zu reinigendem Einlasswasser aus einem Einlasspfad (19) und Produzieren von Permeatwasser in einen Permeatpfad (22) und abgewiesenem Wasser in einen Abweisungspfad (23),
einen Rückführungspfad (24), angeordnet zum Zurückführen von abgewiesenem Wasser aus dem Abweisungspfad (23) zum Einlasswasser,
einen Abwasserpfad (25), angeordnet zum Leiten von abgewiesenem Wasser aus dem Abweisungspfad (23) zu einem Ablass (26);
eine Kühlanordnung (30), umfassend eine Kühlvorrichtung (31, 39), wobei die Kühlanordnung (30) ausgelegt ist zum Kühlen des zurückgeführten abgewiesenen Wassers im Rückführungspfad (24) mit der Kühlvorrichtung (31, 39);
eine Speisepumpe (5), angeordnet zum Aufnehmen des Einlasswassers über den Einlasspfad (19) und zum Pumpen von Speisewasser über einen Speisepfad (21) zu einem Einlass der RO-Vorrichtung (2);
einen Permeatrückführungspfad (15), der den Permeatpfad (22) an einem Rückführungspunkt und den Einlasspfad (19) fluidisch verbindet;
eine Steuervorrichtung (55), angeordnet am Permeatrückführungspfad (15) zum Steuern der Strömung im Permeatrückführungspfad (15);
einen Heizer (3), angeordnet zum Erwärmen von Permeatwasser im Permeatpfad (22) stromaufwärts des Rückführungspunktes;
ein Permeatventil (9), angeordnet am Permeatpfad (22) und angeordnet zum Steuern der Strömung im Permeatpfad (22) zwischen einem offenen Zustand und einem geschlossenen Zustand, wobei der Rückführungspunkt (48) stromaufwärts des Permeatventils (9) befindlich ist;
ein Einlassventil (4) angeordnet am Einlasspfad (19) und angeordnet zum Steuern der Strömung im Einlasspfad (19) zwischen einem offenen Zustand und einem geschlossenen Zustand;
ein Ablassventil (12), angeordnet im Abwasserpfad (25);
einen Sensor (7, 8, 18, 28), ausgelegt zum Messen einer Eigenschaft, die indikativ für eine Temperatur der RO-Membran ist;
eine Steuerungsanordnung (40), ausgelegt zum
Steuern der Vorrichtung (1) zum Durchführen einer Wärmedesinfektion der RO-Membran (2a) mittels durch den Heizer (3) geheiztem Permeatwasser, wobei die Wärmedesinfektion Leiten des erwärmten Permeatwassers über den Permeatrückführungspfad (15) durch die RO-Membran (2a) umfasst; und Steuern der Kühlanordnung (30) zum Kühlen des zurückgeführten abgewiesenen Wassers im Rückführungspfad (24) zum Kühlen der RO-Membran (2a), um eine gewünschte Temperatur der RO-Membran (2a) zu erreichen, basierend auf der gemessenen Eigenschaft, die indikativ für eine Temperatur der RO-Membran ist, nachdem die Wärmedesinfektion der RO-Membran (2a) abgeschlossen ist,
wobei die Steuerungsanordnung (40) ausgelegt ist zum Verhindern, unter Verwendung des Einlassventils (4), dass frisches Einlasswasser die RO-Vorrichtung (2) erreicht;
Verhindern, unter Verwendung des Permeatventils (9), dass Permeatwasser aus der Vorrichtung (1) geleitet wird; und
Verhindern, unter Verwendung des Ablassventils (12), dass während der Wärmedesinfektion und Kühlung der RO-Membran (2a) abgewiesenes Wasser zum Ablass geleitet wird.

2. Wasserreinigungsvorrichtung (1) nach Anspruch 1, wobei die Steuerungsanordnung (40) ausgelegt ist zum Steuern der Kühlanordnung (30) zum Verringern der Temperatur der RO-Membran (2a) mit einer gewünschten Temperaturrate, basierend auf der gemessenen Eigenschaft.

3. Wasserreinigungsvorrichtung (1) nach einem der vorhergehenden Ansprüche, wobei die Kühlanordnung (30) einen Kühlpfad (32, 33) umfasst, der dazu angeordnet ist, Einlasswasser vom Einlasspfad (19) zur Kühlvorrichtung (31, 39) zu leiten, um durch die Kühlvorrichtung (31, 39) als Kühlflüssigkeit verwendet zu werden, wobei der Kühlpfad (32, 33) ferner dazu ausgelegt ist, das Einlasswasser zu leiten, das durch die Kühlvorrichtung (31, 39) als Kühlflüssigkeit verwendet wird und von der Kühlvorrichtung (31, 39) zum Ablass (26) ausgegeben wird.

4. Wasserreinigungsvorrichtung nach Anspruch 3, wobei der Kühlpfad (32, 33) einen Umgehungspfad (36) umfasst, der dazu angeordnet ist, die Kühlvorrichtung (31, 39) zu umgehen und Einlasswasser in den Abwasserpfad (25) oder Kühlpfad (33) stromabwärts der Kühlvorrichtung (31, 39) zu leiten, um das abgewiesene Wasser zu kühlen, das zum Ablass (26) geleitet wird.

5. Wasserreinigungsvorrichtung (1) nach einem der vorhergehenden Ansprüche, wobei die Kühlvorrichtung (31, 39) einen Wärmetauscher (31) umfasst, der dazu angeordnet ist, das abgewiesene Wasser im Rückführungspfad (24) zu kühlen.

6. Wasserreinigungsvorrichtung (1) nach einem der Ansprüche 1 bis 5, wobei die Kühlvorrichtung (39) einen thermoelektrischen Kühler (39) umfasst.

7. Wasserreinigungsvorrichtung (1) nach Anspruch 6, wobei der thermoelektrische Kühler (39) angeordnet ist, um Wärme vom abgewiesenen Wasser im Rückführungspfad (24) auf Permeatwasser im Permeatpfad zu übertragen.

8. Wasserreinigungsvorrichtung (1) nach Anspruch 7, wobei die Vorrichtung (1) einen Sensor (6, 7, 8) umfasst, der angeordnet ist zum Messen einer Eigenschaft, die indikativ für eine Temperatur des Permeatwassers stromabwärts eines Punktes von Wärmeübertragung auf das Permeatwasser ist, wobei die Steuerungsanordnung (40) ausgelegt ist zum Steuern der Kühlanordnung (30) basierend auf der gemessenen Eigenschaft, um eine vorbestimmte Temperatur des Permeatwassers zu erreichen.

9. Wasserreinigungsvorrichtung (1) nach einem der Ansprüche 6 bis 8, wobei der thermoelektrische Kühler (39) angeordnet ist, um Wärme vom zurückgeführten abgewiesenen Wasser im Rückführungspfad (24) auf abgewiesenes Wasser, das zum Ablass geleitet wird, zu übertragen.

10. Wasserreinigungsvorrichtung (1) nach Anspruch 9, umfassend einen Konzentrationssensor (8), angeordnet zum Messen der Konzentration des Permeatwassers, und einen Temperatursensor (27), angeordnet zum Messen einer Eigenschaft, die indikativ für die Temperatur des abgewiesenen Wassers sind, das stromabwärts des thermoelektrischen Kühlers (39) zum Ablass geleitet wird, wobei die Steuerungsanordnung (40) ausgelegt ist zum Steuern der Kühlung des zurückgeführten abgewiesenen Wassers im Rückführungspfad (24) basierend auf der Konzentration des Permeatwassers und der Eigenschaft des abgewiesenen Wassers, das zum Ablass geleitet wird.

11. Verfahren zum Kühlen einer RO-Membran (2a) in einer Wasserreinigungsvorrichtung (1) nach einem der Ansprüche 1 bis 10, wobei das Verfahren Folgendes umfasst:
Empfangen (S1) von zu reinigendem Einlasswasser zur RO-Vorrichtung (2) von einem Einlasspfad (19);
Produzieren (S2) von Permeatwasser in einen Permeatpfad (22) und abgewiesenem Wasser in einen Abweisungspfad (23),
Zurückführen (S3) von abgewiesenem Wasser aus dem Abweisungspfad (23) zum Einlasswasser über einen Rückführungspfad (24);
Durchführen (S6) von Wärmedesinfektion der RO-Membran (2a) mittels durch einen Heizer (3) erwärmtem Wasser, wobei die Wärmedesinfektion Leiten des erwärmten Wassers über einen Permeatrückführungspfad durch die RO-Membran (2a) umfasst; und
Steuern (S8) einer Kühlanordnung (30), umfassend eine Kühlvorrichtung (31, 39), zum Kühlen des zurückgeführten abgewiesenen Wassers im Rückführungspfad (24) mit der Kühlvorrichtung (31, 39) zum Kühlen der RO-Membran (2a), nachdem die Wärmedesinfektion der RO-Membran (2a) abgeschlossen ist, wobei das Durchführen (S6) von Wärmedesinfektion und Steuern (S8), während der Wärmedesinfektion und Kühlung der RO-Membran (2a), Folgendes umfasst:
Verhindern, unter Verwendung eines Einlassventils (4), dass frisches Einlasswasser die RO-Vorrichtung (2) erreicht;
Verhindern, unter Verwendung eines Permeatventils (9), dass Permeatwasser von der Vorrichtung (1) geleitet wird; und
Verhindern, unter Verwendung eines Ablassventils (12), dass abgewiesenes Wasser zum Ablass geleitet wird.

## Revendications

1. Appareil de purification d'eau (1), comprenant :
un dispositif à OI (2) comprenant une membrane à OI (2a), dans lequel le dispositif à OI (2) est configuré pour recevoir de l'eau d'entrée destinée à être purifiée en provenance d'un chemin d'entrée (19), et produire de l'eau perméat dans un chemin de perméat (22) et rejeter de l'eau dans un chemin de rejet (23),
un chemin de recirculation (24) agencé pour effectuer la recirculation d'eau de rejet depuis le chemin de rejet (23) jusqu'à l'eau d'entrée,
un chemin de déchet (25) agencé pour faire passer de l'eau de rejet depuis le chemin de rejet (23) jusqu'à une évacuation (26) ;
un agencement de refroidissement (30) comprenant un dispositif de refroidissement (31, 39), dans lequel l'agencement de refroidissement (30) est configuré pour refroidir l'eau de rejet de recirculation dans le chemin de recirculation (24) avec le dispositif de refroidissement (31, 39) ;
une pompe d'alimentation (5) agencée pour recevoir l'eau d'entrée par l'intermédiaire du chemin d'entrée (19) et pour pomper de l'eau d'alimentation par l'intermédiaire d'un chemin d'alimentation (21) jusqu'à une entrée du dispositif à OI (2) ;
un chemin de recirculation de perméat (15) raccordant fluidiquement le chemin de perméat (22), à un point de recirculation, et le chemin d'entrée (19) ;
un dispositif de commande (55) agencé sur le chemin de recirculation de perméat (15) pour commander le débit dans le chemin de recirculation de perméat (15) ;
un élément chauffant (3) agencé pour chauffer de l'eau perméat dans le chemin de perméat (22) en amont du point de recirculation ;
une vanne de perméat (9) agencée sur le chemin de perméat (22) et agencée pour commander le débit dans le chemin de perméat (22) entre un état ouvert et un état fermé, dans lequel le point de recirculation (48) est situé en amont de la vanne de perméat (9) ;
une vanne d'entrée (4) agencée sur le chemin d'entrée (19) et agencée pour commander le débit dans le chemin d'entrée (19) entre un état ouvert et un état fermé ;
une vanne d'évacuation (12) agencée sur le chemin de déchet (25) ;
un capteur (7, 8, 18, 28) configuré pour mesurer une propriété indicative d'une température de la membrane à OI ;
un agencement de commande (40) configuré pour commander l'appareil (1) pour réaliser une désinfection par chaleur de la membrane à OI (2a) au moyen d'eau perméat chauffée par l'élément chauffant (3), dans lequel la désinfection par chaleur inclut le passage de l'eau perméat chauffée par l'intermédiaire du chemin de recirculation de perméat (15) à travers la membrane à OI (2a) ; et commander l'agencement de refroidissement (30) pour refroidir l'eau de rejet de recirculation dans le chemin de recirculation (24) afin de refroidir la membrane à OI (2a) pour obtenir une température souhaitée de la membrane à OI (2a) sur la base de la propriété mesurée indicative d'une température de la membrane à OI après que la désinfection par chaleur de la membrane à OI (2a) est achevée,
dans lequel l'agencement de commande (40) est configuré pour empêcher de l'eau d'entrée fraîche d'atteindre le dispositif à OI (2), en utilisant la vanne d'entrée (4) ; empêcher de l'eau perméat de passer depuis l'appareil (1) en utilisant la vanne de perméat (9) ; et empêcher de l'eau de rejet de passer à l'évacuation, en utilisant la vanne d'évacuation (12), durant la désinfection par chaleur et le refroidissement de la membrane à OI (2a).

2. Appareil de purification d'eau (1) selon la revendication 1, dans lequel l'agencement de commande (40) est configuré pour commander l'agencement de refroidissement (30) pour réduire la température de la membrane à OI (2a) avec une vitesse de montée de température souhaitée, sur la base de la propriété mesurée.

3. Appareil de purification d'eau (1) selon l'une quelconque des revendications précédentes, dans lequel l'agencement de refroidissement (30) comprend un chemin de refroidissement (32, 33) agencé pour diriger de l'eau d'entrée, depuis le chemin d'entrée (19) jusqu'au dispositif de refroidissement (31, 39), destinée à être utilisée en tant que liquide de refroidissement par le dispositif de refroidissement (31, 39), dans lequel le chemin de refroidissement (32, 33) est en outre configuré pour diriger l'eau d'entrée, utilisée en tant que liquide de refroidissement par le dispositif de refroidissement (31, 39) et sortie du dispositif de refroidissement (31, 39), vers l'évacuation (26).

4. Appareil de purification d'eau selon la revendication 3, dans lequel le chemin de refroidissement (32, 33) comprend un chemin de dérivation (36) agencé pour contourner le dispositif de refroidissement (31, 39) et diriger de l'eau d'entrée dans le chemin de déchet (25) ou le chemin de refroidissement (33) en aval du dispositif de refroidissement (31, 39) afin de refroidir l'eau de rejet passant à l'évacuation (26).

5. Appareil de purification d'eau (1) selon l'une quelconque des revendications précédentes, dans lequel le dispositif de refroidissement (31, 39) comprend un échangeur de chaleur (31) agencé pour refroidir l'eau de rejet dans le chemin de recirculation (24).

6. Appareil de purification d'eau (1) selon l'une quelconque des revendications 1 à 5, dans lequel le dispositif de refroidissement (39) comprend un refroidisseur thermoélectrique (39).

7. Appareil de purification d'eau (1) selon la revendication 6, dans lequel le refroidisseur thermoélectrique (39) est agencé pour transférer de la chaleur, depuis l'eau de rejet dans le chemin de recirculation (24), à de l'eau perméat dans le chemin de perméat.

8. Appareil de purification d'eau (1) selon la revendication 7, dans lequel l'appareil (1) comprend un capteur (6, 7, 8) agencé pour mesurer une propriété indicative d'une température de l'eau perméat en aval d'un point de transfert de chaleur à l'eau perméat, dans lequel l'agencement de commande (40) est configuré pour commander l'agencement de refroidissement (30) sur la base de la propriété mesurée, afin d'obtenir une température prédéterminée de l'eau perméat.

9. Appareil de purification d'eau (1) selon l'une quelconque des revendications 6 à 8, dans lequel le refroidisseur thermoélectrique (39) est agencé pour transférer de la chaleur, depuis l'eau de rejet de recirculation dans le chemin de recirculation (24), à de l'eau de rejet passant à l'évacuation.

10. Appareil de purification d'eau (1) selon la revendication 9, comprenant un capteur de concentration (8) agencé pour mesurer la concentration de l'eau perméat, et un capteur de température (27) agencé pour mesurer une propriété indicative de la température de l'eau de rejet passant à l'évacuation en aval du refroidisseur thermoélectrique (39), dans lequel l'agencement de commande (40) est configuré pour commander le refroidissement de l'eau de rejet de recirculation dans le chemin de recirculation (24) sur la base de la concentration de l'eau perméat et de la propriété de l'eau de rejet passant à l'évacuation.

11. Procédé pour refroidir une membrane à OI (2a) dans un appareil de purification d'eau (1) selon l'une quelconque des revendications 1 à 10, le procédé comprenant :
la réception (S1) d'eau d'entrée, destinée à être purifiée, pour le dispositif à OI (2), en provenance d'un chemin d'entrée (19) ;
la production (S2) d'eau perméat dans un chemin de perméat (22) et d'eau de rejet dans un chemin de rejet (23),
la recirculation (S3) d'eau de rejet depuis le chemin de rejet (23) jusqu'à l'eau d'entrée par l'intermédiaire d'un chemin de recirculation (24) ;
la réalisation (S6) de désinfection par chaleur de la membrane à OI (2a) au moyen d'eau chauffée par un élément chauffant (3), dans lequel la désinfection par chaleur inclut le passage de l'eau chauffée par l'intermédiaire d'un chemin de recirculation de perméat à travers la membrane à OI (2a) ; et
la commande (S8) d'un agencement de refroidissement (30) comprenant un dispositif de refroidissement (31, 39) pour refroidir l'eau de rejet de recirculation dans le chemin de recirculation (24) avec le dispositif de refroidissement (31, 39), afin de refroidir la membrane à OI (2a) après que la désinfection par chaleur de la membrane à OI (2a) est achevée, dans lequel la réalisation (S6) de désinfection par chaleur et la commande (S8) comprennent, durant la désinfection par chaleur et le refroidissement de la membrane à OI (2a) les faits :
d'empêcher de l'eau d'entrée fraîche d'atteindre le dispositif à OI (2), en utilisant une vanne d'entrée (4) ;
d'empêcher de l'eau perméat de passer depuis l'appareil (1), en utilisant une vanne de perméat (9) ; et
d'empêcher de l'eau de rejet de passer à l'évacuation, en utilisant une vanne d'évacuation (12).
